Europäisches Patentamt

European Patent Office

Office européen des brevets

(19)

(11) Publication number: **0 195 355 B1**

# EUROPEAN PATENT SPECIFICATION

(12)

(45) Date of publication of patent specification: 27.03.91

(51) Int. Cl.⁵: **C08G 77/04, C08L 83/04, C03C 27/06, B32B 17/10, G02B 6/26**

(21) Application number: 86103254.8

(22) Date of filing: 11.03.86

(54) Refractive-index-coupling elastic composition for optical communication fiber joints.

(30) Priority: 12.03.85 JP 48559/85

(43) Date of publication of application:
24.09.86 Bulletin 86/39

(45) Publication of the grant of the patent:
27.03.91 Bulletin 91/13

(84) Designated Contracting States:
BE DE FR GB IT NL

(56) References cited:
EP-A- 0 003 044
EP-A- 0 063 954
EP-A- 0 110 072
US-A- 4 128 299
US-A- 4 511 620

PATENT ABSTRACTS OF JAPAN, vol. 7, no. 73 (P-186)[1218], 25th March 1983; & JP - A - 58 2812 (NIPPON DENSHIN DENWA KOSHA) 08-01-1983

(73) Proprietor: **Toray Silicone Company Limited Mitsui Building No. 6 2-8 Nihonbashi-Muromachi Chuo-ku Tokyo 103(JP)**

(72) Inventor: **Suzuki, Toshio 6, 1-chome, Yushudai Nishi Ichihara-shi Chiba Pref.(JP)**

(74) Representative: **Spott, Gottfried, Dr. et al Patentanwälte Spott und Puschmann Sendlinger-Tor-Platz 11 W-8000 München 2(DE)**

## Description

The present invention relates to a refractive-index-coupling elastic composition for optical communication fiber joints. More specifically, the present invention relates to an organopolysiloxane type refractive-index-coupling elastic composition for the joints of optical communication fibers joined by the connecting method.

Optical communication glass fibers and optical communication plastic fibers (optical fibers below) may be joined by one of two methods: splicing or connecting in which the ends are placed face to face without splicing. Because precision connectors have recently been developed, connecting is preferred and appears to be more workable.

A refractive-index coupler is generally used in the connecting method. It is filled into the gap at the ends of the optical fibers in order to prevent light transmission loss by reflection. As announced in Report No. 2232 at the 1984 National General Meeting of the Institute of Electronics and Communication Engineers of Japan, silicone oils and silicone oil compounds, in which silicone oil is combined with silica, etc., for thickening, are considered to be appropriate refractive-index couplers.

Disadvantages of the Prior Art

However, silicone oils are liquids and thus leak out, which causes a void to appear in the joint. Silicone oil compounds, which represent an improvement on silicone oils, have a grease-like consistency and will not leak out. However, air bubbles formed in the grease-like compound cannot be removed. In addition, coating the silicone oil compound on the fiber ends requires a very high level technique to avoid the inclusion of air bubbles.

Various methods were examined by the present inventor in order to develop a refractive-index coupler which would not have the above-mentioned disadvantages and the present invention was thus developed as a result. The goal of the present invention is to eliminate the above-mentioned disadvantages of the prior art technologies by providing a refractive-index coupler which does not leak out or trap air bubbles.

Summary of the Invention

The present invention relates to a refractive-index-coupler elastic composition for optical communication fiber joints comprising (A) an organopolysiloxane having the average unit formula

$R_a SiO_{(4-a)/2}$

in which R is a monovalent radical selected from the group consisting of hydrocarbon radicals and halogenated alkyl radicals, with the proviso that at least 50 mol% of R is methyl and 5 to 20 mol% of R is phenyl, and a has an average value of 1.8 to 2.2, having at least two vinyl, allyl or propenyl radicals in each molecule, and has an $n_D^{25}$ of from 1.45 to 1.48, (B) organohydrogenpolysiloxane having the average unit formula

$R'_b SiO_{(4-b)/2}$

in which R' is a monovalent radical selected from the group consisting of hydrogen atom, hydrocarbon radical, and halogenated hydrocarbon and b has an average value of 1.5 to 3.0, and has at least two silicon-bonded hydrogen atoms in each molecule, the organohydrogenpolysiloxane being in a quantity such that the molar ratio of silicon-bonded hydrogen atoms per lower alkenyl radical in component (A) is from 0.2:1 to 5.0:1, and (C) a platinum catalyst in an amount of from 0.1 to 100 parts by weight platinum metal per one million parts by weight of the combined weight of (A) and (B), and said composition having an elastic modulus in compression of $1.0 \times 10^{-4}$ to $3.0 \times 10^{-1}$ kg/mm$^2$ at 25°C after curing.

Description of the Preferred Embodiments

Component (A) is the principal component of the elastic composition of the present invention. It is expressed by the average unit formula

$R_a SiO_{(4-a)/2}$

in which R is a monovalent radical selected from hydrocarbon radicals and halogenated alkyl radicals, and a is 1.8 to 2.2 on average and contains at least two vinyl, allyl, or propenyl radicals in each molecule. The lower alkenyl radicals may be present at any location in the molecule, but they are preferably present at least at the molecular terminals. Examples of the monovalent hydrocarbon radicals R are alkyl radicals such as methyl, ethyl, propyl, and butyl; aryl radicals such as phenyl, tolyl, and benzyl; and the above-mentioned, alkenyl radicals; and halogenated alkyl radicals such as chloropropyl, fluoropropyl, and 3,3,3-trifluoropropyl. In addition to R, a small quantity of silicon-bonded alkoxy or hydroxyl groups may be present. In addition, this component must have an $n_D^{25}$ (refractive index) of 1.45 to 1.48 measured using the D line of sodium at 25°C. In order to achieve such a refractive index, at least 50 mol% of R is methyl and 5 to 20 mol% of R is phenyl. a is 1.8 to 2.2 on average, but is advantageously 1.95 to 2.05 in order to achieve the desired post-cure modulus. An $n_D^{25}$ of 1.45 to 1.48 is specified for this component because the core materials of many optical fibers have an $n_D^{25}$ in this range.

The molecular configuration of this component may be straight chain, straight chain with branches, or cyclic, but a straight chain, possibly with a small number of branches, is preferred. The preferred straight chained organopolysiloxane is a linear polydiorganosiloxane The molecular weight of this component is unrestricted, but the weight-average molecular weight is desirably ≥ 1,000 in order to achieve the desired modulus and it is preferably ≤ 100,000 to facilitate operations such as mixing and molding.

Examples of this organopolysiloxane are dimethylvinylsiloxy-terminated dimethylsiloxane-diphenylsiloxane copolymer, dimethylvinylsiloxy-terminated dimethylsiloxane-methylphenylsiloxane copolymer, dimethylvinylsiloxy-terminated dimethylsiloxane-methylvinylsiloxane-diphenylsiloxane copolymer, dimethylvinylsiloxy-terminated dimethylsiloxane-methylvinylsiloxane-methylphenylsiloxane copolymer, trimethylsiloxy-terminated dimethylsiloxane-methylvinylsiloxane-diphenylsiloxane copolymer, trimethylsiloxy-terminated dimethylsiloxane-methylvinylsiloxane-methylphenylsiloxane copolymer, and dimethylsiloxane-diphenylsiloxane-methylvinylsiloxane copolymer in which one end is blocked with the trimethylsiloxy unit and the other end is blocked with the dimethylvinylsiloxy unit.

Especially preferred examples of this linear polydiorganosiloxane are a dimethylvinylsiloxy terminated polydiorganosiloxane having dimethylsiloxane units and methylphenylsiloxane units and having a viscosity of $25^\circ$ C in the range of from 1 to 10 Pa.s. and a dimethylvinylsiloxy terminated polydiorganosiloxane having dimethylsiloxane units and diphenylsiloxane units and having a viscosity at $25^\circ$ C in the range of from 1 to 10 Pa.s.

Component (B) is a crosslinker for component (A) and is an organohydrogenpolysiloxane. It addition-reacts with component (A) in the presence of component (C) to cure component (A) into an elastic material.

For this reason, this component must contain at least two silicon-bonded hydrogen atoms in each molecule. This component can be expressed by the average unit formula

$$R'_b SiO_{(4-b)/2}.$$

In this formula, R' is a monovalent hydrocarbon radical, halogenated alkyl radical, or a hydrogen atom. In addition to the hydrogen atom, R' is exemplified as for R except however, alkenyl radicals are excluded. b is a value averaging 1.5 to 3.0. This component should be miscible with component (A), so at least 50 mol% of R' should be methyl. The molecular configuration of this component is straight chain, straight chain with branches, cyclic, network, or three dimensional. The molecular weight of this component is unrestricted. The quantity of addition of this component is determined by the requirement that the molar ratio of SiH in this component to lower alkenyl in component (A) be 0.2:1 to 5.0:1. When the elastic material should have a relatively low modulus, this molar ratio should be 0.2:1 to 1:1. When the elastic material is to have a high modulus, this molar ratio should be 1:1 to 5.0:1. A satisfactory elastic material is not produced when this molar ratio is less than 0.2:1. When this molar ratio exceeds 5.0:1, the modulus will exceed the target value.

Examples of this organohydrogenpolysiloxane are trimethylsiloxy-terminated methylhydrogenpolysiloxane, trimethylsiloxy-terminated dimethylsiloxane-methylhydrogensiloxane copolymer, dimethylhydrogensiloxy-terminated methylhydrogenpolysiloxane, dimethylhydrogensiloxy-terminated dimethylsiloxane-methylhydrogensiloxane copolymer, tetramethyltetrahydrogencyclotetrasiloxane, pentamethyltrihydrogencyclotetrasiloxane, tri(dimethylhydrogensiloxy)methylsilane, trimethylsiloxy-terminated dimethylsiloxanediphenylsiloxane-methylhydrogensiloxane copolymer, and dimethylhydrogensiloxy-terminated dimethylsiloxane-diphenylsiloxane-methylhydrogensiloxane copolymer.

Component (C) catalyzes the crosslinking addition reaction of component (A) and component (B). Examples of said platinum catalysts are finely divided platinum, possibly supported on a carrier, platinum black, chloroplatinic acid, sodium chloroplatinate, potassium chloroplatinate, platinum tetrachloride, alcohol-modified chloroplatinic acid, chloroplatinic acid-olefin complexes, chloroplatinic acid-alkenylsiloxane complexes, and diketone chelate compounds of platinum.

This component is added at 0.1 to 100 parts by weight as platinum metal per 1,000,000 parts by weight of the combined quantity of components (A) and (B). When this quantity is less than 0.1 part by weight, a satisfactory crosslinking will not occur. It is uneconomical for this quantity to exceed 100 parts by weight.

The elastic material of the invention is produced by mixing the three components (A), (B), and (C), possibly in the presence of a curing retarder which can control the crosslinking reaction, and then allowing the mixture to stand at room or elevated temperature.

Examples of the above-mentioned retarders are triallyl isocyanurate, triazoles, nitrile compounds, acetylene compounds, and vinyl-substituted cyclic polysiloxane. To use the elastic composition of this invention to couple the refractive index of the optical fiber joint, the elastic material, crosslinked into membrane form, is inserted into the joint, or the uncrosslinked liquid composition may be filled in the joint gap and then crosslinked.

The elastic composition of the present invention must have a post-cure elastic modulus in compression of $1.0 \times 10^{-4}$ to $3.0 \times 10^{-1}$ $kg/mm^2$ at $25°C$. When the elastic composition has an elastic modulus in compression of $< 1.0 \times 10^{-4}$ $kg/mm^2$, it will flow because the viscosity component of the viscoelastic behavior is increased. The elasticity of an elastic composition with an elastic modulus in compression of $> 3.0 \times 10^{-1}$ $kg/mm^2$ is too high and the fiber ends cannot be brought into tight contact. The term "elastic material" includes tacky materials denoted as "gels," elastic materials denoted as "elastomers or rubbers," or elastic materials denoted as "soft resins" may be used as long as the material has a modulus in the above-mentioned range.

Silica fillers and thermal stabilizers are optionally added to the elastic composition of the present invention. In order to increase the adhesiveness, vinyltrialkoxysilane, γ-methacryloxypropyltrialkoxysilane, or siloxanes with alkoxy and methacrylic groups may also be added. In order to raise the strength within the range of the prescribed modulus, organopolysiloxanes composed of $(CH_3)_2(CH=CH_2)SiO_{1/2}$ units and $SiO_2$ units or organopolysiloxanes composed of $(CH_3)_2(CH=CH_2)SiO_{1/2}$ units, $(CH_3)_3SiO_{1/2}$ units, and $SiO_2$ units may also be added.

The present invention will be illustrated using examples of execution. "Parts" and "%" in the examples are "parts by weight" and "weight percent" respectively. The viscosity is the value measured at $25°C$.

EXAMPLE 1

100 Parts dimethylvinylsiloxy-terminated dimethylsiloxane-methylphenylsiloxane copolymer (dimethylsiloxane unit:methylphenylsiloxane unit molar ratio = 76:24, viscosity, 2 Pa.s; $n_D^{25}$ = 1.455) was mixed with 1.0 part dimethylhydrogensiloxy-terminated methylhydrogenpolysiloxane with a viscosity of 0.01 Pa.s, 0.2 part of a 1% chloroplatinic acid solution in 2-ethylhexanol and 0.005 part 3-methyl-1-butyn-3-ol and this mixture was molded into a thin membrane and then cured at $150°C$ for 30 minutes to produce a transparent, rubbery elastic membrane with a thickness of 10 μm and an elastic modulus in compression of 0.10 $kg/mm^2$. This elastic membrane was inserted into the joint of a graded-index multimode optical fiber (core diameter, 50 μm; fiber diameter, 125 μm). The measured transmission loss increment at the joint was ≤ 0.1 dB. For comparison, the transmission loss increment was ≥ 0.3 dB in the absence of the elastic membrane and was 0.1 to 0.2 dB for a joint with a transparent elastic membrane of polysiloxane ($n_D^{25}$ = 1.43).

EXAMPLE 2

100 Parts dimethylvinylsiloxy-terminated dimethylsiloxane-diphenylsiloxane copolymer (dimethylsiloxane unit: diphenylsiloxane unit molar ratio = 85:15; viscosity, 1.5 Pa.s; $n_D^{25}$ = 1.465) was mixed with 0.34 part tetramethyltetrahydrogencyclotetrasiloxane, and 0.1 part of 1% chloroplatinic acid in 2-ethylhexanol injected into the joint (design gap, 8 μm) between the ends of the same type of optical fiber as in Example 1 and this was then heated at $80°C$ for 2 hours. The organopolysiloxane composition was converted into a transparent, elastic gel which was filled between the optical fiber ends. The elastic modulus in compression of this elastic gel was $1.2 \times 10^{-3}$ $kg/mm^2$. The measured transmission loss increment was ≥ 0.4 dB in the absence of the elastic gel and at ≤ 0.1 dB in the presence of the gel filler. A joint (connector) filled with the elastic gel was subjected to 1000 temperature cycles (1 cycle = 1 hour from -20°C to 80°C). Then the measured transmission loss increment was ≤ 0.1 dB. For comparison, the transparent elastic product (elastic modulus in compression of 0.8 $kg/mm^2$) of a commercial nonsilicone composition ($n_D^{25}$ = 1.465) was tested as above. The transmission loss increment is 0.2 dB before the temperature cycles and ≥ 0.4 dB after the temperature cycles.

EXAMPLE 3

100 Parts dimethylvinylsiloxy-terminated dimethylsiloxane-methylphenylsiloxane-methylvinylsiloxane copolymer (molar ratio among siloxane units = 64.0:35.5:0.5; viscosity, 3 Pa.s; $n_D^{25}$ = 1.475) was thoroughly mixed with 0.8 part 1,1,3,3,5,7,-hexamethyl-5,7-dihydrogencyclotetrasiloxane, 10 parts methylphenyldimethoxysilane-treated fumed silica (average primary particle size, 10 mμ), 0.2 part of 1% chloroplatinic acid solution in 2-ethylhexanol and 0.003 part 3-methyl-1-butyn-3-ol to produce a transparent organopolysiloxane composition. The resulting mixture was then cured under the conditions of Example 1 to give a rubbery elastic membrane (membrane thickness, 30 μm; elastic

modulus in compression, 0.25 kg/mm$^2$ ). This elastic membrane was tested in a joint as described in Example 1 and the transmission loss increment was 0.15 dB. Thirty samples were examined by the joint test, but no sample had an increment of > 0.2 dB in transmission loss. For comparison, thirty samples of a silicone oil compound (n$_D^{25}$ = 1.475) were examined in the joint test. Two samples had a 0.2 dB transmission loss increment and this was due to the mixing air bubbles into the silicone oil compound.

Effects of the Invention

The application of the refractive-index-coupling elastic composition of the present invention to the gap in an optical fiber joint produces an optical fiber joint which does not suffer from oil leakage, the admixture of air bubbles or from a transmission loss increment. Such an optical fiber joint produced by the above method is crucial to optical fiber communications.

**Claims**

1. A refractive-index-coupler elastic composition for optical communication fiber joints comprising
   (A) an organopolysiloxane having the average unit formula
   $R_aSiO_{(4-a)/2}$
   in which R is a monovalent radical selected from hydrocarbon radicals and halogenated alkyl radicals, with the proviso that at least 50 mol% of R is methyl and 5 to 20 mol% of R is phenyl, and a has an average value of 1.8 to 2.2, having at least two vinyl, allyl or propenyl radicals in each molecule, and has an n$_D^{25}$ of from 1.45 to 1.48,
   (B) organohydrogenpolysiloxane having the average unit formula
   $R'_bSiO_{(4-b)/2}$
   in which R' is a monovalent radical selected from hydrogen atom, hydrocarbon radical, and halogenated hydrocarbon and b has an average value of 1.5 to 3.0, and has at least two silicon-bonded hydrogen atoms in each molecule, the organohydrogenpolysiloxane being in a quantity such that the molar ratio of silicon-bonded hydrogen atoms per lower alkenyl radical in component (A) is from 0.2:1 to 5.0:1, and
   (C) a platinum catalyst in an amount of from 0.1 to 100 parts by weight platinum metal per one million parts by weight of the combined weight of (A) and (B), and said composition having an elastic modulus in compression of 1.0 x 10$^{-4}$ to 3.0 x 10$^{-1}$ kg/mm$^2$ at 25° C after curing.

2. The composition according to claim 1 in which the organopolysiloxane of (A) is such that R is at least 50 mol% methyl and from 5 to 20 mol% phenyl, a has an average value of 1.95 to 2.05, and the lower alkenyl radical is vinyl, and at least 50 mol% of R' is methyl.

3. The composition according to claim 2 in which the molar ratio of silicon-bonded hydrogen atom per vinyl is from 0.2:1 to 1.0:1.

4. The composition according to claim 2 in which the molar ratio of silicon-bonded hydrogen atom per vinyl is from 1.0:1 to 5.0:1.

5. The composition according to claim 2 in which (A) is a linear polydiorganopolysiloxane.

6. The composition according to claim 5 in which (A) is a dimethylvinylsiloxy terminated polydiorganosiloxane having dimethylsiloxane units and methylphenylsiloxane units and having a viscosity at 25° C in the range of from 1 to 10 Pa.s.

7. The composition according to claim 5 in which (A) is a dimethylvinylsiloxy terminated polydiorganosiloxane having dimethylsiloxane units and diphenylsiloxane units and having a viscosity at 25° C in the range of from 1 to 10 Pa.s.

8. The composition according to claim 6 further comprising a curing retarder.

9. The composition according to claim 7 further comprising a curing retarder.

10. The composition according to claim 1 further comprising a silica filler.

**Revendications**

1. Une composition élastique de couplage d'indice de réfraction pour joints de fibres optiques de transmission comprenant :
   (A) un organopolysiloxane répondant à la formule unitaire moyenne
   $R_aSiO_{(4-a)/2}$
   dans laquelle R est un radical monovalent choisi parmi les radicaux hydrocarbonés et les radicaux alkyles halogénés, étant entendu qu'au moins 50 moles % des radicaux R sont des radicaux méthyle et que 5 à 20 moles % des radicaux R sont des radicaux phényle, et a présente une valeur moyenne de 1,8 à 2,2, renfermant au moins deux radicaux vinyle, allyle ou propényle par molécule et présentant un indice $n_D^{25}$ de 1,45 à 1,48,

(B) un organohydrogénopolysiloxane répondant à la formule unitaire moyenne

$R'_bSiO_{(4-b)/2}$

dans laquelle R' est un radical monovalent choisi parmi l'atome d'hydrogène, les radicaux hydrocarbonés et les radicaux hydrocarbonés halogénés et b présente une valeur moyenne de 1,5 à 3,0, renfermant au moins deux atomes d'hydrogène liés au silicium par molécule, l'organohydrogénopolysiloxane étant présent en une quantité telle que le rapport molaire des atomes d'hydrogène liés au silicium aux radicaux alcényles inférieurs du constituant (A) est de 0,2:1 à 5,0:1, et

(C) un catalyseur au platine en une proportion de 0,1 à 100 parties en poids de platine par million de parties en poids du poids total de (A) et (B), ladite composition présentant un module d'élasticité en compression de $1,0 \times 10^{-4}$ à $3,0 \times 10^{-1}$ kg/mm² à 25°C après durcissement.

2. La composition selon la revendication 1, dans laquelle l'organopolysiloxane de (A) est tel que les radicaux R comprennent au moins 50 moles % de radicaux méthyle et de 5 à 20 % de radicaux phényle, a présente une valeur moyenne de 1,95 à 2,05, le radical alcényle inférieur est le radical vinyle et au moins 50 moles % des radicaux R' sont des radicaux méthyle.

3. La composition selon la revendication 2, dans laquelle le rapport molaire des atomes d'hydrogène liés au silicium aux radicaux vinyle est de 0,2:1 à 1,0:1.

4. La composition selon la revendication 2, dans laquelle le rapport molaire des atomes d'hydrogène liés au silicium aux radicaux vinyle est de 1,0:1 à 5,0:1.

5. La composition selon la revendication 2, dans laquelle (A) est un polydiorganopolysiloxane linéaire.

6. La composition selon la revendication 5, dans laquelle (A) est un polydiorganosiloxane terminé par des radicaux diméthylvinylsiloxy qui renferme des motifs diméthylsiloxanes et des motifs méthylphénylsiloxanes et présente une viscosité à 25°C se situant dans l'intervalle de 1 à 10 Pa.s.

7. La composition selon la revendication 5, dans laquelle (A) est un polydiorganosiloxane terminé par des radicaux diméthylvinylsiloxy renfermant des motifs diméthylsiloxanes et des motifs diphénylsiloxanes et présentant une viscosité à 25°C se situant dans l'intervalle de 1 à 10 Pa.s.

8. La composition selon la revendication 6, comprenant en outre un agent retardateur de durcissement.

9. La composition selon la revendication 7, comprenant en outre un agent retardateur de durcissement.

10. La composition selon la revendication 1, comprenant en outre une charge de silice.

## Ansprüche

1. Brechungsindexangepaßte elastische Zusammensetzung zur Verbindung optischer Übertragungsfasern, umfassend

(A) ein Organopolysiloxan mit der Durchschnittseinheitsformel

$R_aSiO_{(4-a)/2}$

worin R ein monovalenter Rest ist, ausgewählt aus Kohlenwasserstoffresten und halogenierten Alkylresten, mit dem Vorbehalt, daß mindestens 50 Molprozent von R Methylgruppen sind und 5 bis 20 Molprozent von R Phenylgruppen sind und a einen Durchschnittswert von 1,8 bis 2,2 hat, das mindestens zwei Vinyl-, Allyl- oder Propenylreste in jedem Molekül aufweist und einen $n_D^{25}$ von 1,45 bis 1,48 hat,

(B) ein Organohydrogenpolysiloxan mit der Durchschnittseinheitsformel

$R'_bSiO_{(4-b)/2}$

worin R' ein monovalenter Rest ist, ausgewählt aus einem Wasserstoffatom, einem Kohlenwasserstoffrest und einem halogenierten Kohlenwasserstoff, und b einen Durchschnittswert von 1,5 bis 3,0 hat und das mindestens zwei siliciumgebundene Wasserstoffatome in jedem Molekül hat, wobei das Organohydrogenpolysiloxan in einer solchen Menge vorliegt, daß das molare Verhältnis von siliciumgebundenen Wasserstoffatomen zu Niedrigalkenylresten in Komponente (A) 0,2 : 1 bis 5,0 : 1 ist, und

(C) einen Platinkatalysator in einer Menge von 0,1 bis 100 Gewichtsteilen Platinmetall pro 1 Million Gewichtsteile Gesamtgewicht von (A) und (B), wobei die Zusammensetzung ein Druckelastizitätsmodul von $1{,}0 \times 10^{-4}$ bis $3{,}0 \times 10^{-1}$ kg/mm² bei 25 °C nach dem Härten hat.

2. Zusammensetzung nach Anspruch 1, worin das Organopolysiloxan von (A) so ist, daß R mindestens 50 Molprozent Methylgruppen und 5 bis 20 Molprozent Phenylgruppen hat, a einen Durchschnittswert von 1,95 bis 2,05 hat und der Niedrigalkenylrest eine Vinylgruppe ist und mindestens 50 Molprozent von R' Methylgruppen sind.

3. Zusammensetzung nach Anspruch 2, worin das molare Verhältnis von siliciumgebundenen Wasserstoffatomen zu Vinylgruppen 0,2 : 1 bis 1,0 : 1 ist.

4. Zusammensetzung nach Anspruch 2, worin das molare Verhältnis von siliciumgebundenen Wasserstoffatomen zu Vinylgruppen 1,0 : 1 bis 5,0 : 1 ist.

5. Zusammensetzung nach Anspruch 2, worin (A) ein lineares Polydiorganopolysiloxan ist.

6. Zusammensetzung nach Anspruch 5, worin (A) ein Polydiorganosiloxan mit Dimethylsiloxaneinheiten und Methylphenylsiloxaneinheiten und mit Dimethylvinylsiloxyendgruppen ist, das eine Viskosität bei 25 °C im Bereich von 1 bis 10 Pa.s hat.

7. Zusammensetzung nach Anspruch 5, worin (A) ein Polydiorganosiloxan mit Dimethylsiloxaneinheiten und Diphenylsiloxaneinheiten und mit Dimethylvinylsiloxyendgruppen ist, das eine Viskosität bei 25 °C im Bereich von 1 bis 10 Pa.s hat.

8. Zusammensetzung nach Anspruch 6, zusätzlich enthaltend einen Härtungsverzögerer.

9. Zusammensetzung nach Anspruch 7, zusätzlich enthaltend eine Härtungsverzögerer.

10. Zusammensetzung nach Anspruch 1, zusätzlich enthaltend einen Siliciumoxidfüllstoff.